# EUROPEAN PATENT SPECIFICATION

(11) **EP 2 075 436 B1**
(45) Date of publication and mention of the grant of the patent: **08.08.2012**
(21) Application number: 08172249.8
(22) Date of filing: 19.12.2008
(51) Int. Cl.: F02C 7/00, F02K 3/00, B64F 5/00, B64F 1/00, F01D 25/28, F02C 7/20

(54) **Ferry flight engine fairing kit**
Einlaufkonus für ein Gasturbinentriebwerk
Cône d'entrée pour une turbine à gaz

(30) Priority: 28.12.2007 US 966165
(43) Date of publication of application: 01.07.2009
(73) Proprietor: General Electric Company, Schenectady, NY 12345 (US)
(72) Inventor: Daniels, James Lloyd, Walton, KY 41094 (US)
(74) Representative: Williams, Andrew Richard

(56) References cited:
- EP-A- 0 850 831
- EP-A- 1 452 707
- US-A- 3 000 533
- US-A- 3 646 980
- US-A- 3 871 844

## Description

The technology described herein relates generally to gas turbine engines, and more particularly, to a fairing kit for transporting such engines on ferry flights.

At least one known gas turbine engine assembly includes a fan assembly that is mounted upstream from a core gas turbine engine. During operation, a portion of the airflow discharged from the fan assembly is channeled downstream to the core gas turbine engine wherein the airflow is further compressed. The compressed airflow is then channeled into a combustor, mixed with fuel, and ignited to generate hot combustion gases. The combustion gases are then channeled to a turbine, which extracts energy from the combustion gases for powering the compressor, as well as producing useful work to propel an aircraft in flight. The other portion of the airflow discharged from the fan assembly exits the engine through a fan stream nozzle.

Gas turbine engines such as described herein are frequently installed on aircraft in pairs or multiples, such that in the course of normal operation the aircraft is propelled in flight by two, three, four, or more gas turbine engines. With such multi-engine installations, the aircraft may in some circumstances be safely operated with fewer than all installed engines operating.

In service, gas turbine engines are subject to ordinary wear and tear, as well as instances wherein the engine itself may experience unusual wear and tear due to external or internal causes which make continued operation of the engine impossible or inadvisable. Engines which are in need of service or repair to return to satisfactory operating condition frequently must be transported to a suitable service or repair facility, which may be located some distance from where the engine was taken out of service. To transport the engine, therefore, steps must be taken to remove the engine from the aircraft on which it is installed for transportation as cargo or it must be transported by the aircraft while still in its installed location.

Some aircraft have been configured specifically to carry a non-operating gas turbine engine to transport the engine from one location to another, such as to a location where it is needed for operation or to a service or repair facility to be returned to service. A special fixed or removable mounting pylon may be provided for this purpose. A known system for transporting an engine is described US 4209149. Other aircraft may be configured so as to be able to transport a non-operating gas turbine engine in a conventional mounting location.

When a non-operating aircraft gas turbine engine is carried aloft in an exposed position on the exterior of an aircraft (as opposed to being carried internally as cargo in a transport container), it is exposed to temperature and humidity changes as well as precipitation, dirt, debris, and other contaminants which may reach the core portion of the engine. Due to the possibility of moisture being present in the core portion of the engine after such a journey, a lengthy heating and drying process is normally required before the engine can be serviced or operated.

Additionally, the non-operating aircraft gas turbine engine may have internal parts, particularly in the core portion of the engine, which have been subject to wear, damage, or contamination such that free rotation (or windmilling) of the engine due to airflow experienced during a non-operating transport operation may cause further wear and/or damage to such parts.

Accordingly, there remains a need for a method for preparing and transporting non-operating aircraft gas turbine engines which limits exposure, to moisture and contamination, and free rotation, from transporting externally on an aircraft.

In one aspect according to the present invention, a fairing kit for a gas turbine engine is described. The engine has a core gas turbine engine, a fan rotor, and a plurality of external fan blades attached to the fan rotor and powered by the core gas turbine engine. The core gas turbine engine has an annular splitter for directing a portion of incoming airflow into the core gas turbine engine. The fairing kit comprises: a) a fairing; b) a plurality of fasteners for securing the fairing to the core gas turbine engine; and c) a conformable seal for sealing mating surfaces of the fairing and the core gas turbine engine.

Various aspects and embodiments of the present invention will now be described in connection with the accompanying drawings, in which:
Figure 1 is a cross-sectional illustration of an exemplary gas turbine engine assembly;
Figure 2 is a partial cross-sectional elevational view of an exemplary gas turbine engine, illustrating an exemplary embodiment of a fairing installed on the engine;
Figure 3 is a cross-sectional view of the fairing of Figure 2 in a disassembled condition;
Figure 4 is a partial view of the exemplary gas turbine engine of Figure 1 illustrating an exemplary borescope motoring pad with a coverplate installed;
Figure 5 is a partial view of the borescope motoring pad of Figure 4 with the coverplate removed; and

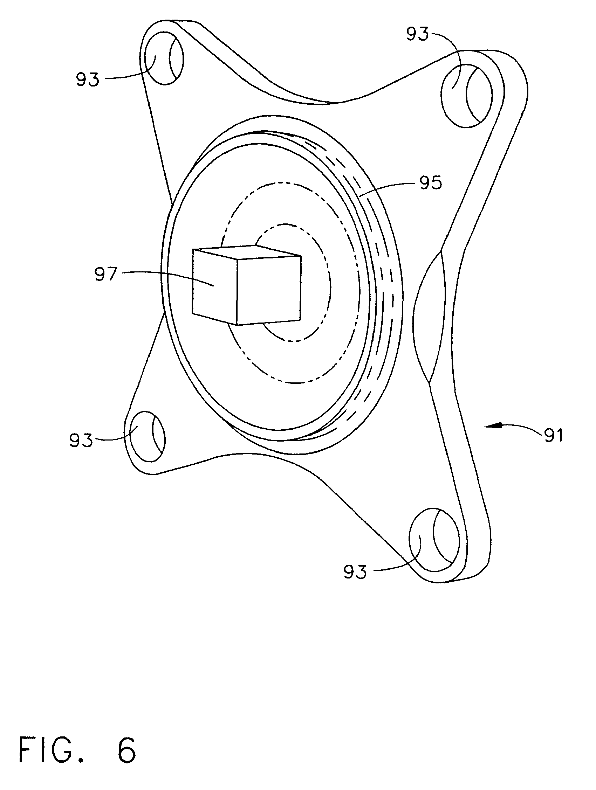

Figure 6 is a perspective view of an exemplary locking plate suitable for use with the borescope motoring pad of Figures 4 and 5.

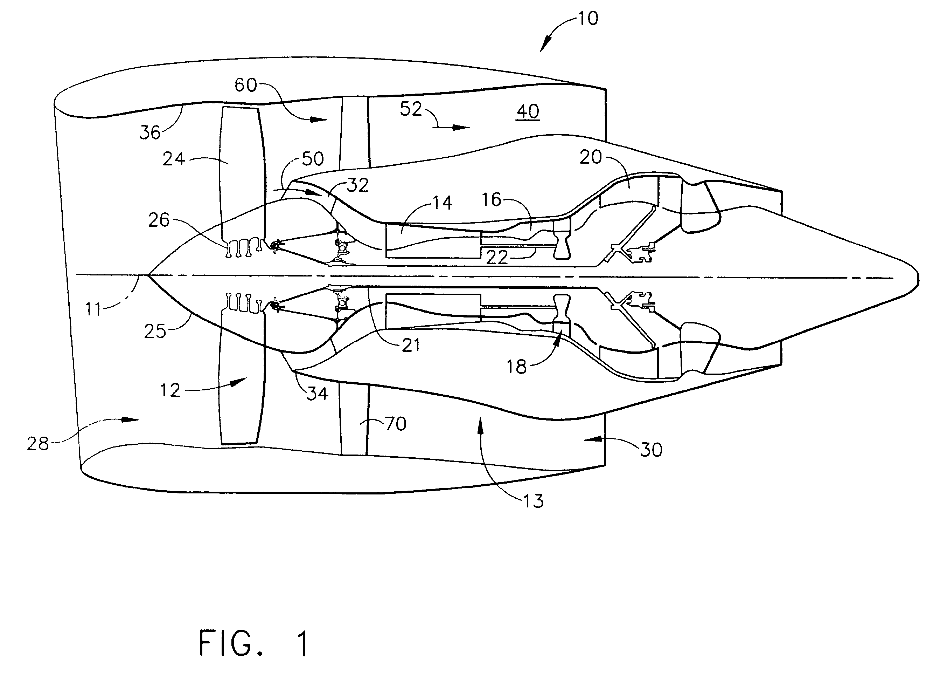

Figure 1 is a cross-sectional schematic illustration of an exemplary gas turbine engine assembly 10 having a longitudinal axis 11. Gas turbine engine assembly 10 includes a fan assembly 12 and a core gas turbine engine 13. Core gas turbine engine 13 includes a high pressure compressor 14, a combustor 16, and a high pressure turbine 18. In the exemplary embodiment, gas turbine engine assembly 10 also includes a low pressure turbine 20, and a multi-stage booster compressor 32, and a splitter 34 that substantially circumscribes booster 32.

Fan assembly 12 includes an array of fan blades 24 extending radially outward from a rotor disk 26, the forward portion of which is enclosed by a streamlined spinner 25. Gas turbine engine assembly 10 has an intake side 28 and an exhaust side 30. Fan assembly 12, booster 22, and turbine 20 are coupled together by a first rotor shaft and compressor 14 and turbine 18 are coupled together by a second rotor shaft 22.

In operation, air flows through fan assembly 12 and a first portion 50 of the airflow is channeled through booster 32. The compressed air that is discharged from booster 32 is channeled through compressor 14 wherein the airflow is further compressed and delivered to combustor 16. Hot products of combustion (not shown in Figure 1) from combustor 16 are utilized to drive turbines 18 and 20, and turbine 20 is utilized to drive fan assembly 12 and booster 32 by way of shaft 21. Gas turbine engine assembly 10 is operable at a range of operating conditions between design operating conditions and off-design operating conditions.

A second portion 52 of the airflow discharged from fan assembly 12 is channeled through a bypass duct 40 to bypass a portion of the airflow from fan assembly 12 around core gas turbine engine 13. More specifically, bypass duct 40 extends between a fan casing or shroud 36 and splitter 34. Accordingly, a first portion 50 of the airflow from fan assembly 12 is channeled through booster 32 and then into compressor 14 as described above, and a second portion 52 of the airflow from fan assembly 12 is channeled through bypass duct 40 to provide thrust for an aircraft, for example. Splitter 34 divides the incoming airflow into first and second portions 50 and 52, respectively. Gas turbine engine assembly 10 also includes a fan frame assembly 60 to provide structural support for fan assembly 12 and is also utilized to couple fan assembly 12 to core gas turbine engine 13.

Fan frame assembly 60 includes a plurality of outlet guide vanes 70 that extend substantially radially between a radially outer mounting flange and a radially inner mounting flange and are circumferentially-spaced within bypass duct 40. Fan frame assembly 60 may also include a plurality of struts that are coupled between a radially outer mounting flange and a radially inner mounting flange. In one embodiment, fan frame assembly 60 is fabricated in arcuate segments in which flanges are coupled to outlet guide vanes 70 and struts. In one embodiment, outlet guide vanes and struts are coupled coaxially within bypass duct 40. Optionally, outlet guide vanes 70 may be coupled downstream from struts within bypass duct 40.

Fan frame assembly 60 is one of various frame and support assemblies of gas turbine engine assembly 10 that are used to facilitate maintaining an orientation of various components within gas turbine engine assembly 10. More specifically, such frame and support assemblies interconnect stationary components and provide rotor bearing supports. Fan frame assembly 60 is coupled downstream from fan assembly 12 within bypass duct 40 such that outlet guide vanes 70 and struts are circumferentially-spaced around the outlet of fan assembly 12 and extend across the airflow path discharged from fan assembly 12.

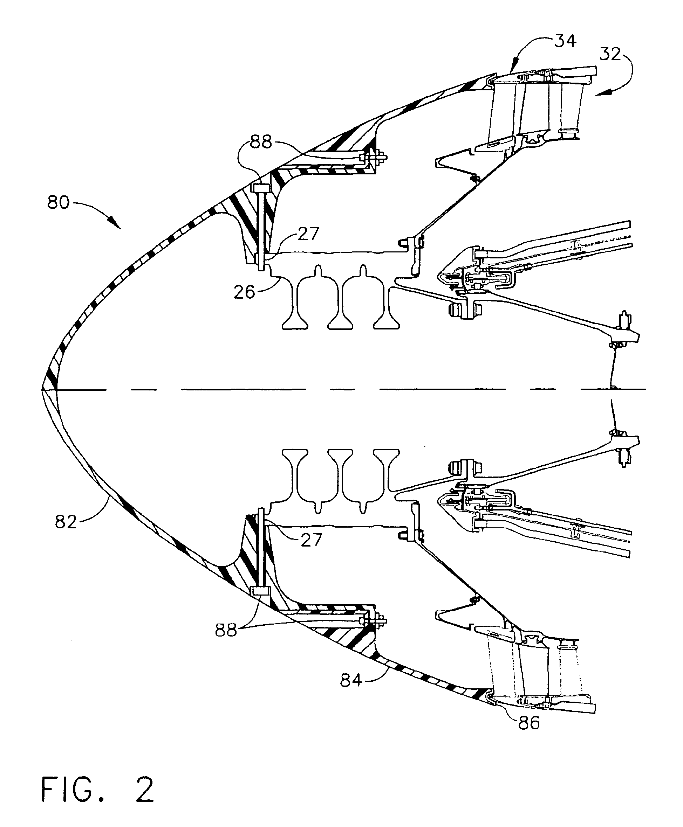

Figure 2 is a partial cross-sectional elevational view of the forward portion of an exemplary aircraft gas turbine engine such as depicted in Figure 1. As shown in Figure 2, a fairing 80 has been installed on the core gas turbine engine 13 in place of the spinner 25 and the fan blades 24 which have been removed and stored separately for transportation. In the embodiment shown in Figure 2, the fairing 80 is of two-piece construction, comprising an inner portion 82 and an outer portion 84. Inner portion 82 and outer portion 84 are joined to one another as well as to the fan rotor 26 by bolts or other suitable fasteners 88 and suitably located mounting holes provided in the fairing components. Mounting holes 27 in the fan rotor 26, such as may typically be used to fasten the spinner 25 in place, may be utilized to secure the fairing 80 via fasteners 88.

Depending upon the physical configuration of the gas turbine engine upon which the fairing 80 is to be installed, the fairing may be of one-piece (i.e., unitary) construction or multi-piece (i.e., two or more pieces) construction. The fairing 80 has a generally streamlined shape, typically of rounded conical or bullet-shaped design, to minimize drag on the engine during transport. The elements of the fairing are sized, shaped, and adapted to suit the characteristics of the particular engine application desired.

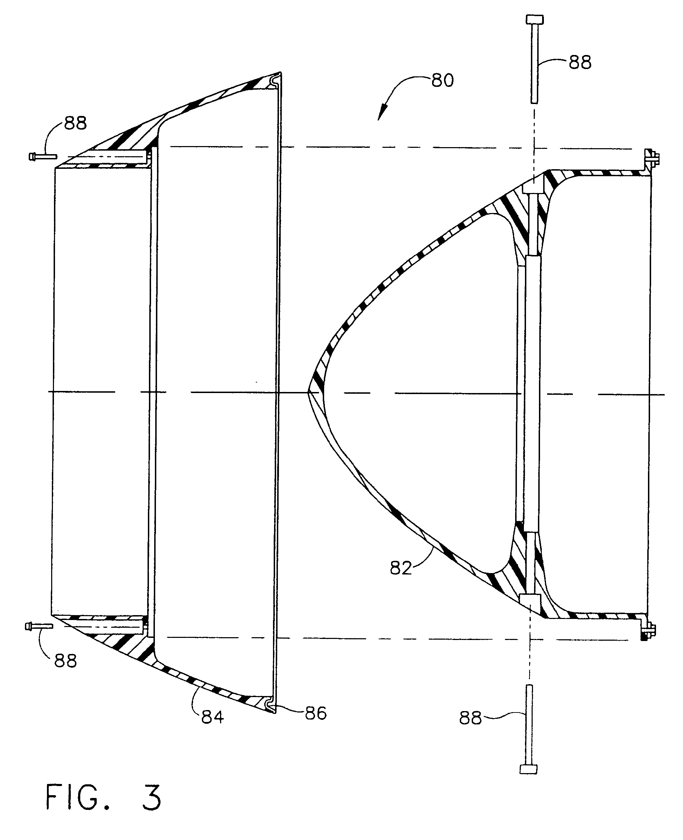

Figure 3 is a cross-sectional elevational view of the fairing 80, similar to the view of Figure 2 but showing the fairing 80 in a disassembled condition and depicting the relationship of inner and outer portions 82 and 84, respectively. In the embodiment shown, the outer portion 84 is of annular configuration and surrounds and is secured to the inner portion 82. Also shown in Figure 3 is an annular seal 86, which may be formed from rubber, foam, plastic, or other conformable material, which abuts and forms a substantially if not fully airtight seal against splitter 34 when the fairing 80 is installed on the core gas turbine engine 13. Other configurations may be possible wherein the annular seal 86 is integrally formed with the fairing 80, such as wherein the fairing 80 is formed from a material which is suitably compliant so as to conform to and sealingly engage the splitter 34.

For the embodiment shown in Figures 2 and 3, the fairing 80 is installed after removing and separately storing the spinner 25 and fan blades 24. The inner portion 82 of the fairing 80 is installed on the fan rotor 26 via mounting holes 27 and a plurality of fasteners 88. The outer portion of the fairing 84 is then installed over and around the inner portion 82 and is fastened to the inner portion 82 via fasteners 88. As the outer portion 84 is secured in position, outer portion 84 moves axially toward the core gas turbine engine and the annular seal 86 comes into contact with and sealingly engages the forward portion of the splitter 34, so as to seal the opening of the booster 32 and prevent introduction of moisture, contaminants, and airflow into the booster 32 and thus into the core gas turbine engine 13. As such, for the embodiment shown the process of securing the fairing 80 to the core gas turbine engine is a two phase operation wherein the first portion is secured first, followed by the second portion.

By effectively sealing the front of the booster 32, the fairing 80 prevents air from flowing through the booster 32 during flight and imparting any rotational forces to the booster 32 (and any other rotating turbomachinery or accessories which share shaft 21 with booster 32). Air is also prevented from flowing through the compressor 14, as well as through both high pressure turbine 18 and low pressure turbine 20, and thereby avoiding imparting any rotational forces to those components (and any other rotating turbomachinery or accessories connected to shafts 21 or 22).

Additionally, the sealing engagement of the fairing 80 with the splitter 34 coupled with the mechanical engagement of the fairing 80 with the fan rotor 26 (via fasteners 88) provides mechanical resistance to rotation for fan rotor 26 and any other components within the core gas turbine engine 13 which are associated with the shaft 21 to which the fan rotor 26 is attached.

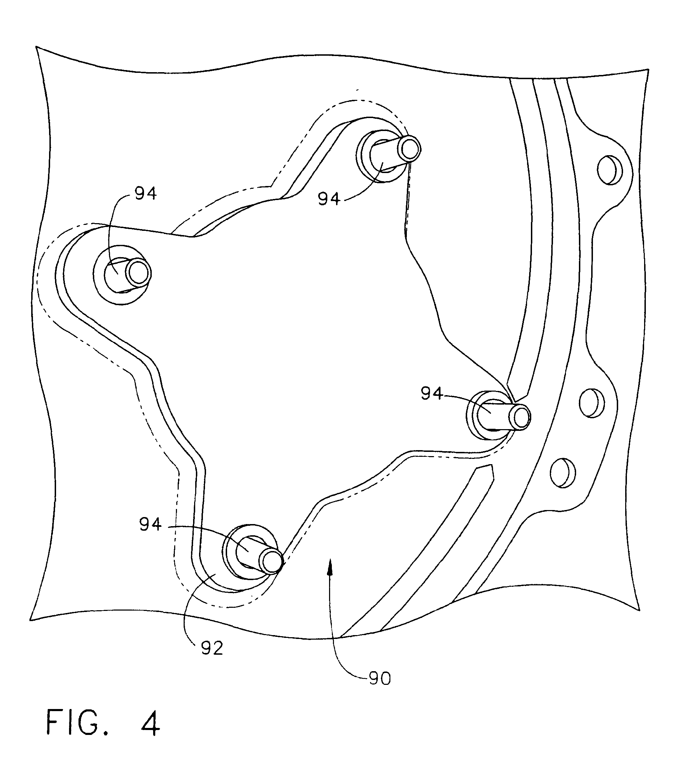

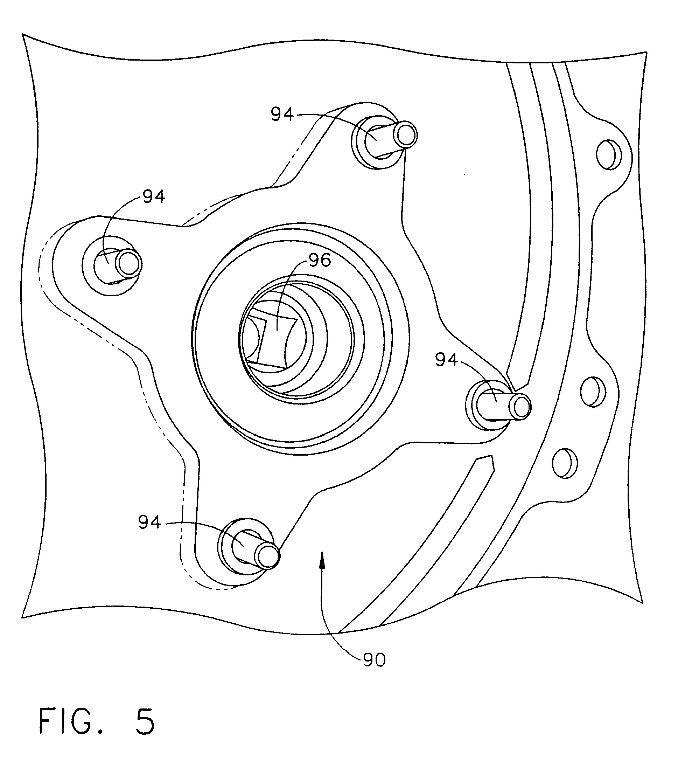

Many aircraft gas turbine engines have a location where a device can be attached to rotate the core gas turbine engine 13 for inspection and/or service operations, such as borescope inspection. This location (shown in Figures 4 and 5) is commonly referred to as a borescope motoring or turning pad 90. Borescope motoring pad 90 is a location where a coverplate 92 can be removed via fasteners 94 (such as bolts, pins, screws, or other fasteners) to expose a socket 96 which is adapted for engagement by a tool (such as a ½ inch square drive ratchet, wrench, or bar) or a motorized drive assembly to rotate the core gas turbine engine 13 through a suitable gearbox assembly.

To provide additional optional mechanical security against rotation of the core gas turbine engine 13 during a transport operation, a rotor lock 91 of suitable configuration for the particular engine application may be utilized. Such a rotor lock has suitable mounting holes 93, a seal 95, and a knob 97 of suitable configuration to engage the socket 96. The rotor lock 91 may be installed on the borescope motoring pad 90, engaging the socket 96 and sealing the opening via seal 95, and secured in place via fasteners 94, thereby mechanically preventing rotation of the socket 96 and all other rotating parts mechanically coupled to the socket 96. Rotor locks such as rotor lock 90 may be fabricated of any suitable material, such as metallic or composite materials, having suitable strength to resist turning motion of the socket 96.

In the exemplary embodiment, the fairing 80 may be a fiberglass material, a graphite material, a carbon material, a ceramic material, an aromatic polyamid material such as KEVLAR, a thin metallic material such as, but not limited to, titanium, aluminum, and/or a Metal Matrix Composite (MMC) material, and/or mixtures thereof. Any suitable thermosetting polymeric resin can be used in forming fairing 80, for example, vinyl ester resin, polyester resins, acrylic resins, epoxy resins, polyurethane resins, bismalimide resin, and mixtures thereof. Overall, the material is selected such that an exterior surface of fairing 80 is resistant to wear and or damage that may be caused by foreign objects ingested into gas turbine engine assembly 10. Alternate fairing configurations may use a thin metal wrap over a composite fairing to protect against such wear or damage.

This written description uses examples to disclose the invention, including the preferred mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A fairing kit for use with a gas turbine engine, said engine having a core gas turbine engine (13), a fan rotor (26), and a plurality of external fan blades (24) attached to said fan rotor (26) and powered by said core gas turbine engine (13), said core gas turbine engine (13) having an annular splitter (34) for directing a portion of incoming airflow into said core gas turbine engine (13), said fairing kit comprising:
a fairing (80); and
a plurality of fasteners (88) to secure said fairing (80) to said core gas turbine engine (13); **characterised in that**
a conformable seal (86) is provided to seal mating surfaces of said fairing (80) and said core gas turbine engine (13), and said fairing (80) includes a first portion (82) for securement to said fan rotor (26) and an annular second portion (84) which surrounds and is secured to said first portion (82).

2. The fairing kit of claim 1, wherein said fairing (80) has a streamlined shape.

3. The fairing kit of any preceding claim, wherein said fairing (80) is of multi-piece construction.

4. The fairing kit of any preceding claim, wherein said fairing (80) is capable of being secured to said splitter (34).

5. The fairing kit of any preceding claim, wherein said fairing (80) is capable of being secured to a fan rotor (26).

6. The fairing kit of any preceding claim, wherein said fairing is capable of sealing and preventing airflow through said core gas turbine engine (13).

7. The fairing kit of any of the preceding claims, wherein said second portion (84) is capable of being sealingly engaged to said splitter (34) when secured to said first portion (82).

8. The fairing kit of any of the preceding claims, wherein said fairing (80) is configured so as to be capable of providing mechanical resistance to rotation of components within said core gas turbine engine (13).

9. The fairing kit of any of the preceding claims, wherein said fairing kit further includes a rotor lock (91) capable of preventing rotation of components within said core gas turbine engine (13).

## Patentansprüche

1. Verkleidungsteilesatz zur Verwendung mit einem Gasturbinentriebwerk, wobei das Triebwerk ein Kerngasturbinentriebwerk (13), einen Bläserrotor (26) und mehrere an dem Bläserrotor (26) angebrachte und von dem Kerngasturbinentriebwerk (13) angetriebene externe Bläserlaufschaufeln (24) enthält, wobei das Kerngasturbinentriebwerk (13) einen ringförmigen Teiler (34) besitzt, um einen Teil des ankommenden Luftstroms in das Kerngasturbinentriebwerk (13) zu leiten, und wobei der Verkleidungsteilesatz aufweist:
eine Verkleidung (80); und
mehrere Befestigungselemente (88), um die Verkleidung (80) an dem Kerngasturbinentriebwerk (13) zu befestigen;
**dadurch gekennzeichnet, dass**:
eine verformbare Dichtung (86) vorgesehen ist, um gegenüberliegende Oberflächen der Verkleidung (80) und des Kerngasturbinentriebwerks (13) abzudichten, und die Verkleidung (80) einen ersten Abschnitt (82) zur Befestigung an dem Bläserrotor (26) und einen ringförmigen zweiten Abschnitt (84), welcher den ersten Abschnitt (82) umgibt und daran befestigt ist, enthält.

2. Verkleidungsteilesatz nach Anspruch 1, wobei die Verkleidung (80) eine stromlinienförmige Gestalt hat.

3. Verkleidungsteilesatz nach einem der vorstehenden Ansprüche, wobei die Verkleidung (80) eine mehrteilige Konstruktion ist.

4. Verkleidungsteilesatz nach einem der vorstehenden Ansprüche, wobei die Verkleidung (80) an dem Teiler (34) befestigt werden kann.

5. Verkleidungsteilesatz nach einem der vorstehenden Ansprüche, wobei die Verkleidung (80) an einem Bläserrotor (26) befestigt werden kann.

6. Verkleidungsteilesatz nach einem der vorstehenden Ansprüche, wobei die Verkleidung (80) abdichten und einen Luftstrom durch das Kerngasturbinentriebwerk (13) verhindern kann.

7. Verkleidungsteilesatz nach einem der vorstehenden Ansprüche, wobei der zweite Abschnitt (84) abdichtend mit dem Teiler (34) in Eingriff stehen kann, wenn er an dem ersten Abschnitt (82) befestigt ist.

8. Verkleidungsteilesatz nach einem der vorstehenden Ansprüche, wobei die Verkleidung (80) so ausgestaltet ist, dass sie einen mechanischen Widerstand gegen die Drehung von Komponenten in dem Kerngasturbinentriebwerk (30) bereitstellen kann.

9. Verkleidungsteilesatz nach einem der vorstehenden Ansprüche, wobei der Verkleidungsteilesatz ferner eine Rotorarretierung (91) enthält, die die Drehung von Komponenten in dem Kerngasturbinentriebwerk (13) verhindern kann.

## Revendications

1. Kit de carénage à utiliser avec un moteur à turbine à gaz, ledit moteur ayant un corps de moteur à turbine à gaz (13), un rotor de soufflante (26), et une pluralité d'aubes externes de soufflante (24) fixées audit rotor de soufflante (26) et alimentées par ledit corps de moteur à turbine à gaz (13), ledit corps de moteur à turbine à gaz (13) ayant un séparateur annulaire (34) pour diriger une partie d'un écoulement d'air entrant dans ledit corps de moteur à turbine à gaz (13), ledit kit de carénage comprenant :
un carénage (80) ; et
une pluralité de fixations (88) pour fixer ledit carénage (80) audit corps de moteur à turbine à gaz (13) ; **caractérisé en ce que**
un joint d'étanchéité adaptable (86) est prévu pour rendre étanche les surfaces d'accouplement dudit carénage (80) et dudit corps de moteur à turbine à gaz (13), et ledit carénage (80) comprend une première partie (82) destinée à être fixée audit rotor de soufflante (26) et une seconde partie annulaire (84) qui entoure et est fixée à ladite première partie (82).

2. Kit de carénage selon la revendication 1, dans lequel ledit carénage (80) a une forme aérodynamique.

3. Kit de carénage selon l'une quelconque des précédentes revendications, dans lequel ledit carénage (80) a une structure formée de plusieurs pièces.

4. Kit de carénage selon l'une quelconque des précédentes revendications, dans lequel ledit carénage (80) peut être fixé audit séparateur (34).

5. Kit de carénage selon l'une quelconque des précédentes revendications, dans lequel ledit carénage (80) peut être fixé a un rotor de soufflante (26).

6. Kit de carénage selon l'une quelconque des précédentes revendications, dans lequel ledit carénage peut former une étanchéité et empêcher un écoulement d'air à travers ledit corps de moteur à turbine à gaz (13).

7. Kit de carénage selon l'une quelconque des précédentes revendications, dans lequel ladite seconde partie (84) peut être mise en contact étanche avec ledit séparateur (34) quand elle est fixée à ladite première partie (82).

8. Kit de carénage selon l'une quelconque des précédentes revendications, dans lequel ledit carénage (80) est conçu de manière à pouvoir offrir une résistance mécanique à la rotation des composants à l'intérieur dudit corps de moteur à turbine à gaz (13).

9. Kit de carénage selon l'une quelconque des précédentes revendications, dans lequel ledit kit de carénage comprend en outre un dispositif de blocage de rotor (91) pouvant empêcher la rotation des composants à l'intérieur dudit corps de moteur à turbine à gaz (13).
